# EUROPÄISCHE PATENTSCHRIFT

(11) **EP 0 920 793 B1**
(45) Veröffentlichungstag und Bekanntmachung des Hinweises auf die Patenterteilung: **23.06.2004**
(21) Anmeldenummer: 98122644.2
(22) Anmeldetag: 28.11.1998
(51) Int. Cl.: A01B 67/00, B60K 25/00, A01B 71/06

(54) **Steuereinrichtung für Zapfwellen**
Control system for shaft driven power take-off
Système de contrôle pour une prise de force

(30) Priorität: 06.12.1997 DE 19754233
(43) Veröffentlichungstag der Anmeldung: 09.06.1999
(73) Patentinhaber: DEERE & COMPANY, Moline, Illinois 61265-8098 (US)
(72) Erfinder: Hollstein, Jürgen, 68259 Mannheim (DE); Ordelt, Ludwig, 67269 Grünstadt/Sausenheim (DE)
(74) Vertreter: Lau-Loskill, Philipp, Dipl.-Phys.

(56) Entgegenhaltungen:
- EP-A- 0 443 325
- EP-A- 0 697 303
- US-A- 5 310 974
- US-A- 5 611 751

## Beschreibung

Die Erfindung betrifft eine Steuereinrichtung zur Betätigung wenigstens eines Zapfwellensteuergerätes und gegebenenfalls weiterer Steuergeräte eines Arbeitsfahrzeuges. Die Steuereinrichtung weist eine Steuereinheit auf, die elektrisch mit wenigstens den Steuergeräten, mit Bedienelementen zur manuellen Ansteuerung der Steuergeräte, mit wenigstens einem Automatikschalter zur Aktivierung oder Deaktivierung eines Automatikmodus für die automatische Ansteuerung der Steuergeräte und mit einem Steuersystem in Verbindung steht. Das Steuersystem gibt aufgrund von Signalen eines Hubwerksbedienelements Steuersignale zum Anheben und Absenken an ein Anbaugerätehubwerk des Arbeitsfahrzeugs ab. Die Steuereinheit weist Mittel auf, die bei aktiviertem Automatikmodus die Zapfwelle automatisch abschaltet, sofern beim Anheben des Anbaugerätehubwerks eine vorgebbare Hubwerkslage überschritten wird.

Eine derartige Steuereinrichtung geht aus der EP-A-0 697 303 hervor, in der die Integration einer Anzahl von zuschaltbaren Funktionen, wie Zapfwelle, Differentialsperre und Allradantrieb, in einen von der Lage eines Anbaugerätehubwerks abhängigen automatischen Ablauf beschrieben wird. Ist ein Automatikmodus eingestellt, so werden die Funktionen beim Ausheben des Anbaugerätehubwerks nach einem vorgebbaren Programm ausgeschaltet und beim Absenken wieder eingeschaltet. Hierdurch läßt sich beispielsweise am Vorgewende die Anzahl der manuellen Operationen wesentlich reduzieren. Die Zapfwelle wird jedoch beim Absenken aus Sicherheitsgründen nicht in die Automatik einbezogen. Vielmehr erfolgt das Wiederzuschalten der Zapfwelle durch manuelle Betätigung eines Zapfwellenschalters. Das Abpassen des richtigen Zeitpunkts für das Anlaufen der Zapfwelle erfordert von der Bedienungsperson Konzentration und Geschick. Ein zu frühes Zuschalten kann die Zapfwelle und das daran angeschlossene Übertragungsgestänge übermäßig belasten oder beschädigen, da dann das Anbaugerät noch weit ausgehoben ist und die Zapfwellenverbindungen stark abgewinkelt sind. Desweiteren kann bei sich drehender Zapfwelle das hoch ausgehobene Anbaugerät Schmutzteile abschleudern, von denen Gefahren ausgehen können. Bei zu spätem Zuschalten der Zapfwelle steht das Anbaugerät bereits in Kontakt mit dem Boden oder den zu bearbeitenden Pflanzen. Dies erschwert oder verhindert das Anlaufen der Zapfwelle.

Die der Erfindung zugrunde liegende Aufgabe wird darin gesehen, eine gattungsgemäße Steuereinrichtung anzugeben, durch die die genannten Probleme überwunden werden. Insbesondere soll eine Steuereinrichtung angegeben werden, die die Bedienungsperson beim Einschalten der Zapfwelle entlastet, ohne die im Zusammenhang mit der EP-A-0 697 303 genannten Sicherheitsbedenken außer Acht zu lassen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß enthält die eingangs genannte Steuereinrichtung ein Freigabebedienelement, welches elektrisch mit der Steuereinheit verbunden ist. Die Steuereinheit weist Mittel auf, die bei aktiviertem Automatikmodus die Zapfwelle automatisch zuschalten, wenn das Freigabebedienelement in etwa gleichzeitig mit einem durch das Hubwerksbedienelement abgegebenen Senkbefehl betätigt wird.

Durch die erfindungsgemäße Lösung wird die Zapfwelle auch beim Schnellabsenken des Anbaugerätehubwerks in den automatischen Ablauf einbezogen, so daß das Zuschalten der Zapfwelle durch die Steuereinheit automatisch vorgenommen wird. Die Bedienungsperson braucht zum Einschalten der Zapfwelle nicht die Hublage des Anbaugerätehubwerks beobachten. Es ist lediglich erforderlich das Hubwerksbedienelement, durch das der Schnellabsenkvorgang des Anbaugerätehubwerks eingeleitet wird, und den Freigabeschalter gleichzeitig zu betätigen. Damit beansprucht das Wiederzuschalten der Zapfwelle weder die besondere Aufmerksamkeit noch ein besonderes Geschick der Bedienungsperson.

Die erfindungsgemäße Steuereinrichtung ist bedienerfreundlich und weist eine hohe Funktionssicherheit auf. Die Bedienungsperson weiß zu jedem Zeitpunkt wie sich das Arbeitsgerät verhält. Folgenschwere Fehlbedienungen durch mangelnde Erfahrung, Mißverständnis und Konzentrationsmangel sind weitestgehend ausgeschlossen. Die Systemfunktionen und die Bedienelemente lassen sich eindeutig und selbsterklärend darstellen, so daß das "Erspielen" der Funktion möglich ist. Es läßt sich auch sicherstellen, daß bei Komponenten- und Systemfehler das System in einen vorab definierten sicheren Zustand geführt wird.

Es sei bemerkt, daß die automatische Abschaltung der Zapfwelle beim Anheben des Anbaugerätehubwerks nicht notwendigerweise in Abhängigkeit der Hubwerkslage erfolgen muß. Es ist beispielsweise auch möglich die Zapfwelle automatisch abzuschalten, wenn nach einem Signal zum Anheben des Anbaugerätehubwerks eine vorgebbare Zeitspanne (die im Extremfall Null sein kann) abgelaufen ist.

Eine bevorzugte Ausgestaltung der Erfindung sieht vor, daß die Zapfwelle automatisch eingeschaltet wird, wenn beim Absenken die Lage des Anbaugerätehubwerks einen vorgebbaren Prozentsatz seines maximalen Hubwinkels erreicht hat. Dieser Hubwinkel entspricht zweckmäßigerweise einer Hubhöhe, bei der das Arbeitsgerät aus dem Boden oder dem Arbeitsbereich ausgehoben ist. Er beträgt vorzugsweise ungefähr 10% und ist gleich dem Hubwinkel, bei dem beim Anheben des Anbaugerätehubwerks die Zapfwelle ausgeschaltet wird.

Es ist nicht möglich, das Freigabebedienelement zum exakt selben Zeitpunkt mit dem Hubwerksbedienelement zu betätigen. Die Erfindung verlangt daher auch lediglich, daß die Bedienung in etwa gleichzeitig erfolgen soll. Gemäß einer bevorzugten Weiterbildung der Erfindung wird ein Zeitfenster festgelegt, innerhalb dessen eine Betätigung des Freigabebedienelements erfolgen muß, um die automatische Einschaltung der Zapfwelle auszulösen. Hierbei muß das Freigabebedienelement innerhalb eines vorgebbaren Zeitintervalls vor und/oder nach dem Zeitpunkt der Abgabe des Senkbefehls am Hubwerksbedienelement betätigt werden. Vorzugsweise liegt dieses Zeitintervall innerhalb einer Zeitspanne von 300 msec vor bis 500 msec nach der Auslösung des Senkbefehls.

Es kann aus Sicherheitsgründen auch von besonderem Vorteil sein, Mittel vorzusehen, die die Zapfwelle nur dann dauerhaft eingeschaltet halten und nicht gleich nach dem Anlaufen wieder automatisch ausschalten, wenn das Freigabebedienelement so lange in betätigtem Zustand gehalten wird, bis die Zapfwelle angelaufen ist. Alternativ hierzu kann auch eine erneute Betätigung des Freigabebedienelements während oder kurz nach dem Anlaufen der Zapfwelle zum dauerhaften Einschalten verlangt werden.

Ein weiteres zweckmäßiges Kriterium zur Aufrechterhaltung der Zapfwelleneinschaltung ist durch die Lage des Anbaugerätehubwerks gegeben. Demgemäß wird das Zapfwelleneinschaltsignal nur dann aufrechterhalten, wenn das Freigabebedienelement bei Absenken des Anbaugerätehubwerks unter eine vorgebbare Hubwerkslage betätigt ist oder betätigt wird. D. h. das Freigabebedienelement wird entweder so lange in betätigtem Zustand gehalten, bis das Anbaugerätehubwerk auf eine vorgebbare Hubwerkslage abgesenkt ist, oder es wird bei oder nach Erreichen dieser Hubwerkslage erneut betätigt.

Gemäß einer bevorzugten Weiterbildung der Erfindung ist das Freigabebedienelement ein in unbetätigtem Zustand offener Tastschalter. Der Taster ist bei der Systeminitialisierung offen. Er ist nur dann aktiv, wenn der Automodus eingeschaltet und die Zapfwelle in den Automodus eingebunden ist. Diese Ausbildung ermöglicht eine Ausbildung, bei der bei Komponentenund Systemfehlern das System in einen vorab definierten sicheren Zustand geführt wird.

Es ist ferner aus Sicherheitsgründen zweckmäßig, das Freigabebedienelement so in die Steuerung einzubinden, daß durch seine Betätigung jederzeit die Zapfwelle abschaltbar ist. Das Wiederzuschalten ist mit dem Freigabebedienelement jedoch nur wie oben beschrieben möglich.

Um eine in etwa gleichzeitige Betätigung des Hubwerksbedienelements und des Freigabebedienelements zu erleichtern, schlägt eine bevorzugte Ausgestaltung der Erfindung vor, diese beiden Bedienelemente in räumlicher Nähe zueinander anzuordnen, so daß sie gleichzeitig mit einer Hand erreichbar sind.

Eine bevorzugte Weiterbildung der Erfindung ist darin zu sehen, daß die Steuereinheit elektrisch wenigstens mit einem Zapfwellenschalter, einem Zapfwellensteuergerät, einem Differentialsperrschalter, einem Differentialsteuergerät, einem Vierradantriebsschalter und einem Vierradantriebssteuergerät verbunden ist und daß die Steuereinheit in Abhängigkeit der Betätigung der Schalter wahlweise in den Automatikmodus eingebunden werden, durch den die Steuergeräte in Abhängigkeit der Hubwerkslage automatisch nach einem vorgebbaren Programm angesteuert werden. Es wird betont, daß auch weitere Funktionen in den automatischen Ablauf einbezogen werden können.

Ein Sicherheitsaspekt wird durch eine weitere zweckmäßige Ausgestaltung der Erfindung berücksichtigt, der zufolge ein Drehzahlmesser oder Fahrtgeschwindigkeitsmesser vorgesehen ist. Das Steuergerät enthält Mittel, die eine automatische Zuschaltung von Funktionen beim Absenken des Anbaugerätehubwerks nur dann zuläßt, wenn die gemessene Fahrzeuggeschwindigkeit einen vorgebbaren unteren Wert, beispielsweise 0,5 km/h, nicht unterschreitet und/oder einen vorgebbaren oberen Wert, beispielsweise 12 km/h, nicht überschreitet. Bei zu schneller und/oder zu langsamer Fahrt ist der Automatikmodus damit nicht ausführbar.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Schaltungsschema einer erfindungsgemäßen Steuereinrichtung,
- Fig. 2: ein Zustandsdiagramm der erfindungsgemäßen Steuerung,
- Fig. 3: einen Hellblinkmodus,
- Fig. 4: einen Dunkelblinkmodus und
- Fig. 5: ein Zeitdiagramm der Hubposition des Anbaugerätehubwerks.

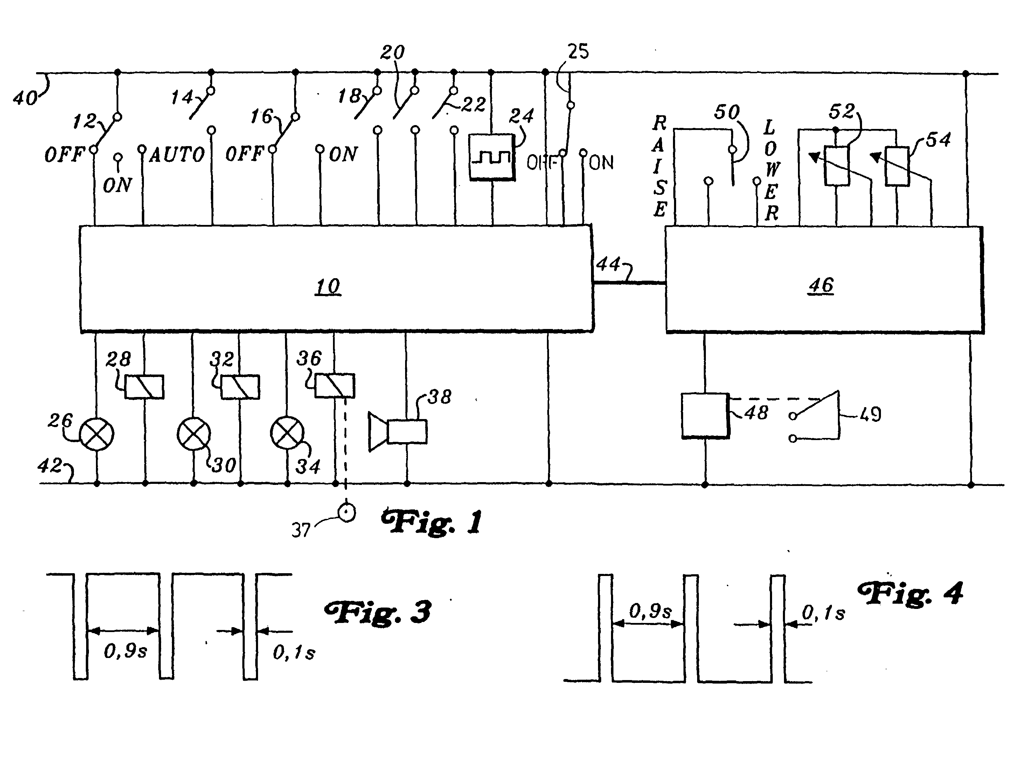

Die in Fig. 1 dargestellte Steuereinrichtung enthält eine elektronische Steuereinheit 10, deren Funktionen und Vorgaben programmierbar sind und die einen Festspeicher zum Speichern von Größen enthält. Die Steuereinheit 10 umfaßt ferner nicht näher dargestellte Signalumformer, Steuerrelais und dergleichen, die der elektrischen Anpassung der angeschlossenen Komponenten dienen. In Fig. 1 sind solche Bauelemente dargestellt, die für die erfindungsgemäße Steuereinrichtung notwendig oder zweckmäßig erscheinen. Eine für die Erfindung geeignete Steuereinheit kann jedoch noch weitere Anschlüsse und Funktionen enthalten.

An die Steuereinheit 10 ist ein Vierradantriebsschalter 12, ein Differentialsperrenschalter 14, ein Zapfwellenschalter 16, ein Automatikschalter 18, zwei Bremsschalter 20, 22, ein Fahrzeuggeschwindigkeitssensor 24, ein Freigabeschalter 25, eine Vierradantriebsleuchte 26, ein Vierradantriebssteuermagnetventil 28, eine Differentialsperrenleuchte 30, ein Differentialsperrensteuermagnetventil 32, eine Zapfwellenleuchte 34, ein Zapfwellensteuermagnetventil 36 und eine akustische Warneinrichtung 38 angeschlossen. Die Steuereinheit 10 ist an die beiden Pole 40, 42 einer nicht näher gezeigten Fahrzeugbatterie angeschlossen.

Der Vierradantriebsschalter 12 ist manuell in stabile Schaltpositionen einstellbar. In der AUS- bzw. EIN-Stellung wird das Vierradantriebssteuermagnetventil 28 angesteuert, um den mechanischen Vorderradantrieb des Antriebsstranges aus- bzw. einzukuppeln. In der AUTO-Stellung erfolgt eine automatische Steuerung des Vierradantriebssteuermagnetventils 28 in Abhängigkeit der Fahrzeuggeschwindigkeit, des Lenkwinkels, der Bremsbetätigung und/oder der Kupplungsbetätigung etc., wie es beispielsweise in der EP-A-0 166 037, DE-C-36 33 399 und DE-A-38 37 357 beschrieben wurde.

Der Differentialsperrenschalter 14 ist als Taster ausgelegt, durch den die Bedienungsperson Steuersignale an das Differentialsperrenmagnetventil 32 zur Betätigung des Hinterachsdifferentials einstellen kann.

Bei dem Zapfwellenschalter 16 handelt es sich um einen zwischen einer EIN-Stellung und einer AUS-Stellung manuell einstellbaren Umschalter, der der Ansteuerung des Zapfwellensteuermagnetventils 36 dient.

Der Automatikschalter 18 ist als manuell betätigbarer Taster ausgelegt, durch den Umschaltsignale an die Steuereinheit 10 einstellbar sind, die die Steuereinheit 10 zwischen einem Normalbetriebsmodus und einem Automatikmodus umschalten.

Die beiden Bremsschalter 20 und 22 stehen mit den nicht dargestellten Betriebsbremsen des Fahrzeugs in Verbindung und werden durch das Bremsen betätigt.

Der Freigabeschalter 25 ist ein manuell bedienbarer Tastschalter, dessen Kontakte in unbetätigter Stellung offen sind. Er befindet sich in unmittelbarer räumlicher Nähe zum Automatikschalter 18, so daß die Bedienungsperson mit einer Hand beide Schalter 18, 25 mühelos gleichzeitig betätigen kann. Mit der Betätigung des Freigabeschalters 25 zum geeigneten Zeitpunkt, bzw. im geeigneten Zeitintervall läßt sich die Zapfwelle 37 auch beim Absenken eines Anbaugerätehubwerks 49 in den automatischen Ablauf einbinden.

Die Vierradantriebsleuchte 26, die Differentialsperrenleuchte 30 und die Zapfwellenleuchte 34, zeigen den Betriebszustand der zugehörigen, nicht näher gezeigten Funktionen (Vierradantrieb, Differentialsperre und Zapfwelle) an. Sind die Leuchten 26, 30, 34 dauerhaft ein- bzw. ausgeschaltet, so zeigen sie an, daß die zugehörige Funktion im Normalbetriebsmodus ein- bzw. ausgeschaltet ist. Die Leuchten 26, 30, 34 können auch im Hellblinkmodus oder im Dunkelblinkmodus aufblinken. Der Hellblinkmodus zeigt an, daß der Automatikmodus aktiviert und die in die Automatik eingebundene Funktion eingeschaltet ist. Der Dunkelblinkmodus zeigt an, daß der Automatikmodus aktiviert und die in die Automatik eingebundene Funktion ausgeschaltet ist.

Das Vierradantriebssteuermagnetventil 28, das Differentialsperrensteuermagnetventil 32 und das Zapfwellensteuermagnetventil 36 stehen jeweils mit einer entsprechenden elektrohydraulischen Kupplung (nicht dargestellt) der zugehörigen Funktionen (Vierradantrieb, Differentialsperre und Zapfwelle 37) in Verbindung.

Die Steuereinheit 10 steht ferner über einen seriellen Bus 44 mit dem Steuersystem 46 für ein Steuerventil 48 eines Anbaugerätehubwerks 49 in Verbindung. Das Steuerventil 48 steuert den Hydraulikölstrom von und zu den Hubzylindern des Anbaugerätehubwerks 49, um dieses anzuheben und abzusenken. An das Steuersystem 46 des Anbaugerätehubwerks 49, das ebenfalls durch die Fahrzeugbatterie 40, 42 gespeist wird, ist ein als mittenzentrierter Wippschalter ausgebildeter Bedienungsschalter 50 angeschlossen, durch den die Bedienungsperson Signale zum schnellen Heben bzw. Senken des Anbau-gerätehubwerks 49 eingeben kann. Ferner sind ein mit dem Anbaugerätehubwerk 49 verbundener Lagewandler 52 und ein Lagegrenzwertwandler 54 an das Steuersystem 46 des Anbaugerätehubwerks 49 angeschlossen. Die Lagewandler 52 und 54 können als verstellbare Potentiometer ausgebildet sein. Der Lagewandler 52 stellt ein der Hubwerkslage entsprechendes Signal zur Verfügung. Über den Lagegrenzwertwandler 54 läßt sich manuell eine obere Grenzlage für das Anbaugerätehubwerk 49 einstellen. Einzelheiten eines Steuersystems für Anbauhubvorrichtungen können beispielsweise der EP-A-0 428 076 entnommen werden.

Der Steuereinheit 10 liegt eine Schaltlogik zugrunde, die aus dem Zustandsdiagramm der Fig. 2 hervorgeht und in weiten Teilen in der EP-A-0 696 303 näher beschrieben wurde. Es handelt sich um ein relativ einfach ausgebildetes Zustandsdiagramm, daß gegebenenfalls durch weitere zweckmäßige Funktionen ergänzt werden kann.

In der Fig. 2 sind sieben oval dargestellte Betriebszustände I bis VII für die beteiligten Funktionen dargestellt. Es werden folgende Funktionen gesteuert:

| | |
|---|---|
| PTO | Zapfwelle 37, |
| Diff. | Hinterachsdifferential, |
| MFWD | mechanischer Vorderradantrieb. |

Die Einstellungen ("Zust.") der Funktionen wurden durch leere bzw. ausgefüllte Kreise und Kreuze dargestellt. Ein ausgefüllter Kreis bedeutet, das die Funktion eingeschaltet, ein leerer Kreis, daß sie abgeschaltet ist. Bei einem Kreuz verharrt die Funktion in der Einstellung, die sie vor dem letzten Zustandswechsel eingenommen hatte.

Den Funktionen sind Leuchten ("Lampe") zugeordnet, die durch Quadrate symbolisiert sind. Ein ausgefülltes bzw. leeres Quadrat bedeutet, daß die Leuchte dauerhaft an bzw. aus ist. Bei einem nur in der rechten, unteren Ecke ausgefüllten Quadrat blinkt die Leuchte im Dunkelblinkmodus, d. h. sie ist während einer Periode von 1 Sekunde 90% der Periodenzeit aus und 10% der Periodenzeit an (siehe Fig. 4). Ist das Quadrat bis auf seine obere, linke Ecke ausgefüllt, so blinkt die Leuchte im Hellblinkmodus, d. h. sie ist während einer Periode von 1 Sekunde 10% der Periodenzeit aus und 90% der Periodenzeit an (siehe Fig. 3).

Im Normalbetriebsmodus ("Normalmodus") können die Funktionen über die Schalter 12, 14 und 16 durch die Bedienungsperson eingestellt werden. Im Automatikmodus erfolgt dagegen die Einstellung der Funktionen zusätzlich nach einem vorgebbaren Programm.

Die Fig. 2 zeigt einen Ausgangszustand I, der sich beim Einschalten der Zündung (Pfeil 60) einstellt. In dem dargestellten Ausgangszustand I befindet sich das Anbaugerät in seiner unteren Stellung und die Schalter 12, 14 und 16 sind eingeschaltet, so daß in dem dargestellten Normalbetriebsmodus alle drei Funktionen eingeschaltet sind und die zugehörigen Leuchten 26, 30, 34 leuchten. Als Ausgangszustand sind für die drei Funktionen, die hier beispielhaft gewählt wurden, auch weitere nicht gezeigte Zustände möglich, die unterschiedlichen Schaltereinstellungen entsprechen und bei denen eine oder mehrere der Funktionen ausgeschaltet sind. Ist eine Funktion in einem der möglichen, aber nicht gezeigten Ausgangszustände ausgeschaltet, so wird sie in den Zuständen II bis VII, in denen der Automatikmodus aktiv ist, nicht automatisch eingeschaltet.

Durch einmaliges Betätigen des Automatikschalters 18 (Pfeil A) geht das System in den Bereitschaftszustand II über, in dem der Automatikmodus aktiv ist, das vorgebbare Programm jedoch noch nicht durchgeführt wird. Die Funktionen bleiben eingeschaltet und die Leuchten blinken im Hellblinkmodus. Durch erneutes Betätigen des Automatikschalters 18 kehrt das System in seinen Ausgangszustand I zurück.

Wird ausgehend vom Bereitschaftszustand II beispielsweise am Feldende durch den Bedienungsschalter 50 ein HEBEN-Signal erzeugt (Pfeil B), so geht das System nach Ablauf eines vorgebbaren Programms in den Aushubzustand III über. Mit dem HEBEN-Signal wird das Ausheben des Hubwerks 49 aus seiner Arbeitsposition in seine Transportstellung eingeleitet. Gleichzeitig wird die Differentialsperre ausgeschaltet, um das Wenden des Fahrzeuges zu ermöglichen. Erreicht das Hubwerk 49 eine durch den Lagewandler 52 erfaßbare vorgebbare Position (vorgebbarer Prozentsatz des maximalen Hubwinkels über der Arbeitshöhe), so wird die Zapfwelle 37 abgeschaltet. Sobald die Lage des Hubwerks 49 eine maximale Hubposition erreicht, die durch den Lagegrenzwertwandler 54 einstellbar ist (Erreichen der Transportstellung), wird der Vorderradantrieb abgeschaltet. Falls nicht alle der genannten Funktionen beim Betätigen des Automatikschalters 18 aktiv waren, wird durch die Steuereinheit 10 ein entsprechend reduziertes Automatikprogramm ausgeführt. Durch Erzeugung eines SENKEN-Signals (Pfeil C) kehrt das System aus dem Aushubzustand III in seinen Bereitschaftszustand II zurück. Die Zapfwelle 37 bleibt jedoch zunächst aus. Sie kann jederzeit von Hand über den Zapfwellenschalter 16 eingeschaltet werden. Wird jedoch in etwa gleichzeitig mit der Erzeugung des SENKEN-Signals (Betätigung des Bedienungsschalters 50) auch der Freigabeschalter 25 betätigt (Pfeil K), so erfolgt erfindungsgemäß mit der Rückkehr in den Bereitschaftszustand II auch eine automatische Einschaltung der Zapfwelle. Dieses Verhalten wird durch ein Kreuz im Kreis im Bereitschaftszustand II symbolisiert.

Die Einstellungen der Funktionen lassen sich bei aktiviertem Automatikmodus überfahren. So ist es beispielsweise möglich, ausgehend von dem Aushubzustand III, in dem alle Funktionen ausgeschaltet sind, eine oder mehrere der Funktionen durch Betätigung der Schalter 12, 14 und/oder 16 einzuschalten.

Werden beispielsweise alle Funktionen manuell eingeschaltet (Pfeil D) so gelangt man zu dem Zustand IV. Durch Abschalten aller Funktionen (Pfeil E) gelangt man zurück zum Aushubzustand III. Wird ausgehend vom Zustand IV das Hubwerk 49 abgesenkt (Pfeil C), so geht das System in den Bereitschaftszustand II über, in dem die Differentialsperre und der Vorderradantrieb automatisch eingeschaltet sind. Die Zapfwelle 37 wird jedoch auch in diesem Fall mit Rückkehr in den Bereitschaftszustand II nur dann automatisch wieder eingeschaltet, wenn in etwa gleichzeitig mit der Erzeugung des SENKEN-Signals auch der Freigabeschalter 25 betätigt (Pfeil K) wird.

Es ist auch möglich, ausgehend vom Bereitschaftszustand II, in dem alle Funktionen eingeschaltet sind, eine oder mehrere der Funktionen durch Betätigung der Schalter 12, 14 und/oder 16 auszuschalten. Werden beispielsweise alle Funktionen manuell ausgeschaltet (Pfeil G) so gelangt man zu dem Zustand V. Durch manuelles Einschalten aller Funktionen (Pfeil F) gelangt man zurück zum Bereitschaftszustand II, in dem alle Funktionen, auch die Zapfwelle 37, wieder eingeschaltet sind. Wird ausgehend vom Zustand V das Hubwerk 49 angehoben (Pfeil B), so geht das System in seinen Aushubzustand III über.

Die Funktion des Vierradantriebes ist nur dann in den Automatikmodus eingebunden, wenn sich der Vierradantriebsschalter 12 beim Aktivieren des Automatikmodus in seiner AUTO-Stellung befindet. In diesem Fall wird der Automatikmodus jedoch durch eine Betätigung der Bremsen oder durch Umschalten des Vierradantriebsschalters 12 in seine EIN- oder AUS-Stellung überfahren Beim Bremsen wird der Vierradantrieb automatisch eingeschaltet und die zugehörige Leuchte 26 geht auf Dauerlicht. Beim Lösen der Bremsen oder beim Rückstellen des Vierradantriebsschalters 12 in seine AUTO-Stellung wird die Vierradantriebsfunktion wieder zeit- und zustandsrichtig in den Automatikmodus eingeführt.

Wird das Hubwerk 49 bei einer Fahrzeuggeschwindigkeit ausgehoben, die größer ist als beispielsweise 12 km/h (Pfeil H), so geht das System aus seinem Bereitschaftszustand II in den Schnellfahrzustand VI über, in dem die Zapfwelle 37 ausgeschaltet, die Einstellung der übrigen Funktionen jedoch beibehalten wird. Fällt die Fahrzeuggeschwindigkeit wieder unter 12 km/h (Pfeil J), so nimmt das System den Zustand VII ein, ohne daß eine Änderung der Einstellungen der Funktionen oder des Lampenmodus erfolgt. Vom Zustand VII kehrt das System durch Senken des Hubwerks 49 (Pfeil C) in seine Bereitschaftsstellung II zurück. Die Zapfwelle 37 wird auch in diesem Fall mit Rückkehr in den Bereitschaftszustand II nur dann automatisch wieder eingeschaltet, wenn in etwa gleichzeitig mit der Erzeugung des SENKEN-Signals auch der Freigabeschalter 25 betätigt (Pfeil K) wird.

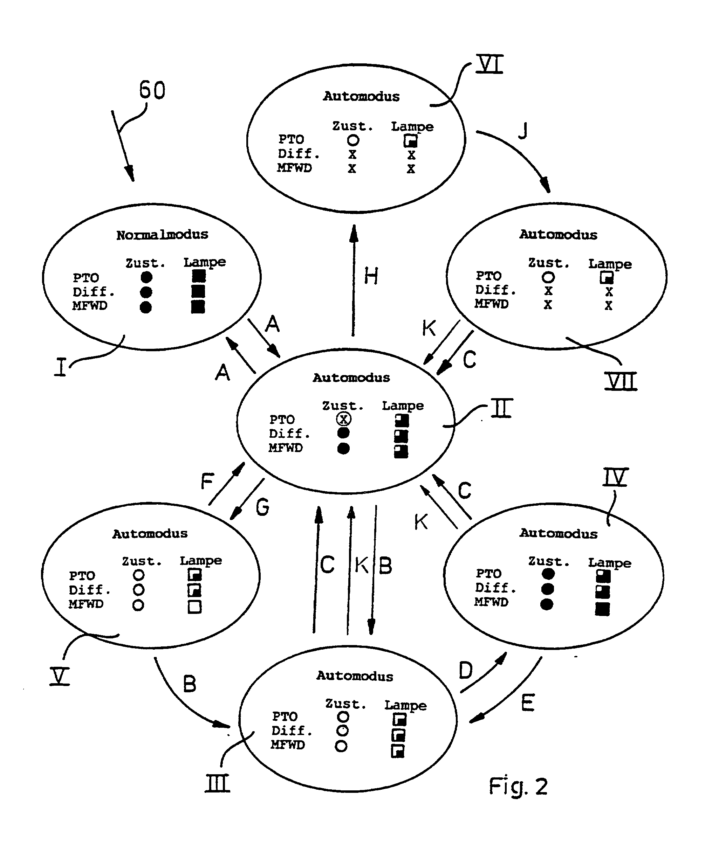

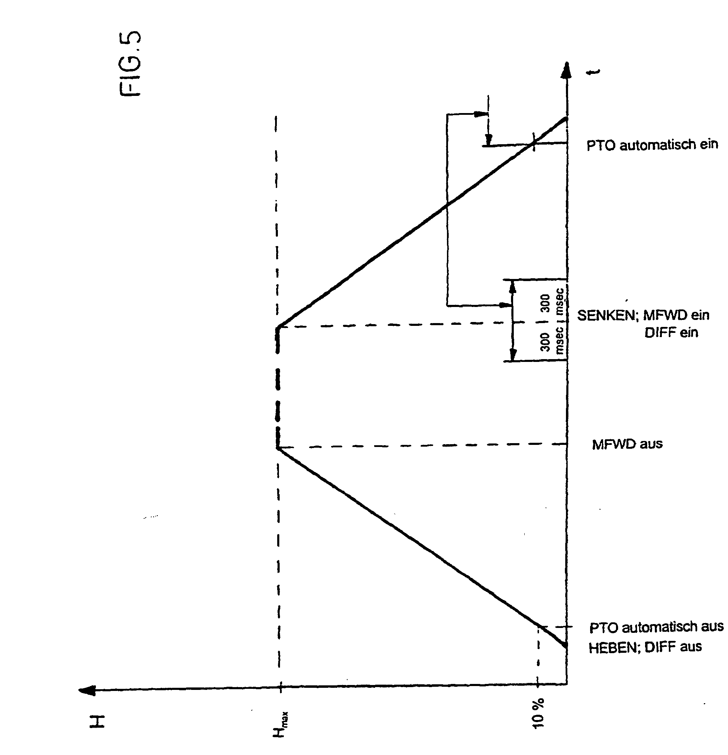

Fig. 5 stellt schematisch den zeitlichen Verlauf der Hubposition H des Anbaugerätehubwerks 49 beim Heben und Senken dar. Mit dem über den Bedienungsschalter 50 manuell vorgegebenen HEBEN-Signal erfolgt ein Schnellaushub des Anbaugerätehubwerks 49. In etwa gleichzeitig mit dem HEBEN-Signal wird die Differentialsperre automatisch ausgeschaltet. Erreicht das Anbaugerätehubwerk 10% seiner maximalen Hubposition Hₘₐₓ, so wird die Zapfwelle 37 automatisch ausgeschaltet. Mit Erreichen der maximalen Hubposition Hₘₐₓ wird der Vorderradantrieb automatisch ausgeschaltet. Eine Schnellabsenkung des Anbaugerätehubwerks 49 wird durch ein SENKEN-Signal über den Bedienungsschalter 50 ausgelöst. Mit dem SENKEN-Signal werden die Differentialsperre und der Vorderradantrieb, nicht jedoch die Zapfwelle 37 eingeschaltet.

Die Zapfwelle 37 kann jederzeit nach dem SENKEN-Signal durch Betätigung des Zapfwellenschalters 16 manuell eingeschaltet werden.

Jedoch erfolgt eine automatische Zuschaltung der Zapfwelle 37 nur dann, wenn der Freigabeschalter 25 im wesentlichen gleichzeitig mit dem Bedienungsschalter 50 betätigt wird und so lange betätigt bleibt, bis die Zapfwelle 37 angelaufen ist. Die Betätigung des Freigabeschalters 25 muß innerhalb eines Zeitfensters Z erfolgen, daß sich von 300 msec vor bis 500 msec nach der Auslösung des SENKEN-Signals erstreckt. In vielen Anwendungsfällen wird es zweckmäßig sein, kürzere Zeiten für das Zeitfenster vorzugeben. Die Zapfwelle 37 läuft unter diesen Bedingungen an, sobald sich das Anbaugerätehubwerk 49 auf 10% seiner maximalen Hubposition Hₘₐₓ abgesenkt hat. Wird die Betätigung des Freigabeschalters 25 zu früh unterbrochen, läuft die Zapfwelle 37 nicht an.

Eine laufende Zapfwelle 37 kann jederzeit durch Betätigung des Zapfwellenschalters 16 oder des Freigabeschalters 25 ausgeschaltet werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

Beispielsweise kann es für die Anwendung der erfinderischen Lehre genügen, lediglich den Freigabeschalter 25 im wesentlichen gleichzeitig mit dem Bedienungschalter 50 zu betätigen, ohne den Freigabeschalter in betätigtem Zustand zu halten, bis die Zapfwelle 37 angelaufen ist. Es kann auch zweckmäßig sein, vorzusehen, daß der Freigabeschalter 25 innerhalb eines vorgebbaren Zeitabschnitts nach dem Anlaufen der Zapfwelle 37 (beispielsweise bis die Arbeitslage des Anbaugerätehubwerks 49 erreicht ist) erneut zu drücken ist, um ein automatischen Abschalten der Zapfwelle 37 zu verhindern. Ferner ist es auch von Vorteil, wenn die Steuereinheit 10 ein Fehlerprogramm durchführt und bei Systemfehlern im Hubwerksbereich oder bei der Automatikfunktion eine automatische Zuschaltung der Zapfwelle 37 unterdrückt.

## Patentansprüche

1. Steuereinrichtung zur Betätigung wenigstens eines Zapfwellensteuergerätes (36) und gegebenenfalls weiterer Steuergeräte (28, 32) eines Arbeitsfahrzeuges mit einer Steuereinheit (10), die wenigstens mit den Steuergeräten (28, 32, 36), mit Bedienelementen (12, 14, 16) zur manuellen Ansteuerung von Steuergeräten (28, 32, 36), mit wenigstens einem Automatikschalter (18) zur Aktivierung oder Deaktivierung eines Automatikmodus für die automatische Ansteuerung von Steuergeräten (28, 32, 36) und mit einem Steuersystem (46), welches aufgrund von Signalen eines Hubwerksbedienelements (50) Steuersignale zum Anheben und Absenken an ein Anbaugerätehubwerk (49) des Arbeitsfahrzeugs abgibt, elektrisch verbunden ist, wobei die Steuereinheit (10) Mittel aufweist, die bei aktiviertem Automatikmodus die Zapfwelle (37) automatisch abschaltet, wenn beim Anheben des Anbaugerätehubwerks (49) eine vorgebbare Hubwerkslage überschritten wird oder eine vorgebbare Zeitspanne abgelaufen ist, **dadurch gekennzeichnet, daß** mit der Steuereinheit (10) ein Freigabebedienelement (25) elektrisch verbunden ist, und daß die Steuereinheit (10) Mittel aufweist, die bei aktiviertem Automatikmodus die Zapfwelle (37) automatisch einschalten, wenn das Freigabebedienelement (25) in etwa gleichzeitig mit einem durch das Hubwerksbedienelement (50) abgegebenen Senkbefehl betätigt wird.

2. Steuereinrichtung nach Anspruch 1, **dadurch gekennzeichnet, daß** die Zapfwelle (37) automatisch eingeschaltet wird, wenn beim Absenken die Lage des Anbaugerätehubwerks (49) einen vorgebbaren Prozentsatz, vorzugsweise ungefähr 10%, seines maximalen Hubwinkels (Hₘₐₓ) erreicht hat.

3. Steuereinrichtung nach Anspruch 1 oder 2, **dadurch gekennzeichnet, daß** zur automatischen Einschaltung der Zapfwelle (37) das Freigabebedienelement (25) innerhalb eines vorgebbaren Zeitintervalls (Z) vor und/oder nach dem Zeitpunkt der Abgabe des Senkbefehls betätigt werden muß.

4. Steuereinrichtung nach Anspruch 3, **dadurch gekennzeichnet, daß** das Zeitintervall (Z) innerhalb einer Zeitspanne von 300 msec vor bis 500 msec nach der Auslösung des Senkbefehls liegt.

5. Steuereinrichtung nach einem der Ansprüche 1 bis 4, **dadurch gekennzeichnet, daß** das Zapfwelleneinschaltsignal nur dann aufrechterhalten wird, wenn das Freigabebedienelement (25) beim Anlaufen der Zapfwelle (37) betätigt ist oder wird.

6. Steuereinrichtung nach einem der Ansprüche 1 bis 5, **dadurch gekennzeichnet, daß** das Zapfwelleneinschaltsignal nur dann aufrechterhalten wird, wenn beim Absenken des Anbaugerätehubwerks (49) unter eine vorgebbare Hubwerkslage das Freigabebedienelement (25) noch betätigt ist oder wieder betätigt wird.

7. Steuereinrichtung nach einem der Ansprüche 1 bis 6, **dadurch gekennzeichnet, daß** das Freigabebedienelement (25) ein in unbetätigtem Zustand offener Tastschalter ist.

8. Steuereinrichtung nach einem der Ansprüche 1 bis 7, **dadurch gekennzeichnet, daß** die Steuereinheit Mittel aufweist, die aufgrund eines Betätigungssignals des Freigabebedienelements (25) die Zapfwelle (37) abschalten.

9. Steuereinrichtung nach einem der Ansprüche 1 bis 8, **dadurch gekennzeichnet, daß** das Hubwerksbedienelement (50) und das Freigabebedienelement (25) in räumlicher Nähe zueinander angeordnet sind, so daß sie gleichzeitig mit einer Hand betätigbar sind.

10. Steuereinrichtung nach einem der Ansprüche 1 bis 9, **dadurch gekennzeichnet, daß** die Steuereinheit (10) elektrisch wenigstens mit einem Zapfwellenschalter (16), einem Zapfwellensteuergerät (36), einem Differentialsperrschalter (14), einem Differentialsteuergerät (32), einem Vierradantriebsschalter (12) und einem Vierradantriebssteuergerät (28) verbunden ist und daß die Steuereinheit (10) in Abhängigkeit der Betätigung der Schalter (12, 14, 16) wahlweise in den Automatikmodus eingebunden werden, durch den die Steuergeräte (28, 32, 26) in Abhängigkeit der Hubwerkslage automatisch nach einem vorgebbaren Programm angesteuert werden.

11. Steuereinrichtung nach einem der Ansprüche 1 bis 10, **dadurch gekennzeichnet, daß** ein Drehzahlmesser (24) oder Fahrtgeschwindigkeitsmesser vorgesehen ist und daß das Steuergerät (10) Mittel enthält, die eine automatische Zuschaltung von Steuergeräten (28, 32, 36) beim Absenken des Anbaugerätehubwerks (49) nur dann zuläßt, wenn die gemessene Fahrzeuggeschwindigkeit einen vorgebbaren unteren Wert, beispielsweise 0,5 km/h, nicht unterschreitet und/oder einen vorgebbaren oberen Wert, beispielsweise 12 km/h, nicht überschreitet.

## Claims

1. Control device for actuation of at least one power take-off control apparatus (36) and if necessary further control apparatuses (28, 32) of a utility vehicle, having a control unit (10) which is electrically connected at least to the control apparatuses (28, 32, 36), to operating elements (12, 14, 16) for manual actuation of control apparatuses (28, 32, 36), to at least one automatic switch (18) for activating or deactivating an automatic mode for the automatic actuation of control apparatuses (28, 32, 36) and to a control system (46) which, on the basis of signals of a lifting gear operating element (50), issues control signals for raising and lowering to a mounted implement lifting gear (49) of the utility vehicle, the control unit (10) having means which automatically disconnect the power take-off shaft (37) in activated automatic mode when, during raising of the mounted implement lifting gear (49), a prescribable lifting gear position is exceeded or a prescribable timespan has expired, **characterised in that** a release operating element (25) is electrically connected to the control unit (10), and **in that** the control unit (10) has means which automatically connect the power take-off shaft (37) in activated automatic mode when the release operating element (25) is actuated approximately simultaneously with a lowering command which is issued by the lifting gear operating element (50).

2. Control device according to claim 1, **characterised in that** the power take-off shaft (37) is automatically connected when, during lowering, the position of the mounted implement lifting gear (49) has achieved a prescribable percentage, preferably approximately 10% of its maximum lifting angle (Hₘₐₓ).

3. Control device according to claim 1 or 2, **characterised in that**, for automatic connection of the power take-off shaft (37), the release operating element (25) must be actuated within a prescribable time interval (Z) before and/or after the time of the issuing of the lowering command.

4. Control device according to claim 3, **characterised in that** the time interval (Z) is within a timespan of 300 ms before to 500 ms after the initiation of the lowering command.

5. Control device according to one of the claims 1 to 4, **characterised in that** the power take-off connection signal is only maintained when the release operating element (25) is actuated or being actuated upon start-up of the power take-off shaft (37).

6. Control device according to one of the claims 1 to 5, **characterised in that** the power take-off connection signal is only maintained when, during lowering of the mounted implement lifting gear (49) below a prescribable lifting gear position, the release operating element (25) is still actuated or is being actuated once again.

7. Control device according to one of the claims 1 to 6, **characterised in that** the release operating element (25) is a push-button which is open in the non-actuated state.

8. Control device according to one of the claims 1 to 7, **characterised in that** the control unit has means which, on the basis of an actuation signal of the release operating element (25), disconnect the power take-off shaft (37).

9. Control device according to one of the claims 1 to 8, **characterised in that** the lifting gear operating element (50) and the release operating element (25) are disposed in spatial proximity to each other, so that they can be actuated simultaneously with one hand.

10. Control device according to one of the claims 1 to 9, **characterised in that** the control unit (10) is electrically connected at least to a power take-off switch (16), to a power take-off control apparatus (36), to a differential locking switch (14), to a differential control apparatus (32), to a four-wheel drive switch (12) and to a four-wheel drive control apparatus (28), and **in that** the control unit (10), dependent upon the actuation of the switches (12, 14, 16), is engaged optionally in the automatic mode, via which the control apparatuses (28, 32, 26) are actuated automatically according to a prescribable programme, dependent upon the lifting gear position.

11. Control device according to one of the claims 1 to 10, **characterised in that** a tachometer (24) or a speedometer is provided, and **in that** the control apparatus (10) contains means which permits an automatic connection of control apparatuses (28, 32, 36) during lowering of the mounted implement lifting gear (49) only when the measured vehicle speed does not fall below a prescribable lower value, for example 0.5 km/h, and/or does not exceed a prescribable upper value, for example 12 km/h.

## Revendications

1. Système de pilotage pour l'actionnement d'au moins un appareil de pilotage d'une prise de force (36) et le cas échéant d'autres appareils de pilotage (28, 32) d'un véhicule de travail, du type comportant une unité de pilotage (10) qui est reliée électriquement au moins aux appareils de pilotage (28, 32, 36), à des éléments d'actionnement (12, 14, 16) destinés à la commande manuelle des appareils de pilotage (28, 32, 36), à au moins un interrupteur automatique (18) destiné à l'activation ou à la désactivation d'un mode automatique de commande automatique des appareils de pilotage (28, 32, 36) et à un système de commande (46) qui, sur la base de signaux provenant d'un élément d'actionnement d'un mécanisme de levage (50), envoie des signaux de commande de relevage et d'abaissement à un mécanisme de levage (49) du véhicule de travail, l'unité de pilotage (10) comportant des moyens qui, en mode automatique activé, déclenchent automatiquement la prise de force (37) quand, lors du soulèvement du mécanisme de levage (49), une position prédéterminée de levage est dépassée, ou qu'une période de temps prédéterminée s'est écoulée, **caractérisé en ce que** l'unité de pilotage (10) est reliée électriquement à un élément de déblocage (25), et **en ce que** l'unité de pilotage (10) comporte des moyens qui, en mode automatique activé, enclenchent automatiquement la prise de force (37) quand l'élément de déblocage (25) est actionné à peu près simultanément avec un ordre d'abaissement transmis par l'élément d'actionnement du mécanisme de levage (50).

2. Système de pilotage selon la revendication 1, **caractérisé en ce que** la prise de force (37) est enclenchée automatiquement quand, lors de l'abaissement de la position du mécanisme de levage (49), un pourcentage prédéterminé, de préférence d'environ 10%, de son angle maximal de levage (Hₘₐₓ) est atteint.

3. Système de pilotage selon l'une des revendications 1 ou 2, **caractérisé en ce que**, pour l'enclenchement automatique de la prise de force (37), l'élément de déblocage (25) doit être actionné au cours d'un intervalle de temps prédéterminé (Z) avant et/ou après l'envoi de l'ordre d'abaissement.

4. Système de pilotage selon la revendication 3, **caractérisé en ce que** l'intervalle de temps (Z) se situe dans un laps de temps allant depuis 300 msec. avant jusqu'à 500 msec. après l'ordre d'abaissement.

5. Système de pilotage selon l'une quelconque des revendications 1 à 4, **caractérisé en ce que** le signal d'enclenchement de la prise de force n'est maintenu que quand l'élément de déblocage (25) est déjà actionné ou est actionné lors du démarrage de la prise de force (37).

6. Système de pilotage selon l'une quelconque des revendications 1 à 5, **caractérisé en ce que** le signal d'enclenchement de la prise de force n'est maintenu que quand, lors de l'abaissement du mécanisme de levage (49) au-dessous d'une position de levage prédéterminée, l'élément de déblocage (25) est encore actionné ou est à nouveau actionné.

7. Système de pilotage selon l'une quelconque des revendications 1 à 6, **caractérisé en ce que** l'élément de déblocage (25) est un interrupteur à contact ouvert à l'état non actionné.

8. Système de pilotage selon l'une quelconque des revendications 1 à 7, **caractérisé en ce que** l'unité de pilotage comporte des moyens qui, à partir d'un signal d'actionnement de l'élément de déblocage (25), déclenche la prise de force (37).

9. Système de pilotage selon l'une quelconque des revendications 1 à 8, **caractérisé en ce que** l'élément d'actionnement du mécanisme de levage (50) et l'élément de déblocage (25) sont disposés au voisinage l'un de l'autre dans l'espace, de sorte qu'ils peuvent être actionnés simultanément par une seule main.

10. Système de pilotage selon l'une quelconque des revendications 1 à 9, **caractérisé en ce que** l'unité de pilotage (10) est reliée électriquement au moins à un interrupteur de prise de force (16), à un appareil de commande de prise de force (36), à un interrupteur de verrouillage différentiel (14), à un appareil de pilotage différentiel (32), à un interrupteur d'entraînement des quatre roues (12) et à un appareil de commande d'entraînement des quatre roues (28) et **en ce que** l'unité de pilotage (10) en fonction de l'actionnement des interrupteurs (12, 14,16) est au choix intégrée dans le mode automatique par lequel les appareils de pilotage (28, 32, 36), en fonction de la position de levage, sont automatiquement commandés selon un programme prédéterminé.

11. Système de pilotage selon l'une quelconque des revendications 1 à 10, **caractérisé en ce qu'**un compte-tours (24) ou un compteur de vitesse de déplacement est prévu, et **en ce que** l'unité de pilotage (10) comporte des moyens qui n'autorisent une commutation automatique des appareils de pilotage (28, 32, 36) lors de l'abaissement du mécanisme de levage (49), que si la vitesse mesurée du véhicule ne tombe pas au-dessous d'une valeur inférieure prédéterminée par exemple 0,5 km/h et/ou ne dépasse pas une valeur supérieure prédéterminée par exemple 12 km/h.
